# EUROPEAN PATENT APPLICATION

(11) **EP 4 778 659 A1**
(43) Date of publication of application: **22.07.2026**
(21) Application number: 26153248.5
(22) Date of filing: 21.01.2026
(51) Int. Cl.: B23K 1/00, B23K 1/005, B23K 1/18, B23K 101/06, B23K 101/14, B23K 103/04, B23K 103/12

(54) **BRAZING PROCESS**

(30) Priority: 21.01.2025 IT 202500000984
(71) Applicant: Optoprim S.r.l., 20124 Milano (MI) (IT)
(72) Inventor: Zarini, Stefano, 20871 Vimercate (MB) (IT); Gueudry, Charles, 75015 Paris (FR)
(74) Representative: Caldon, Giuliano

(57) **Abstract**

Brazing process, which comprises a step of arranging a first component (21), metallic, with tubular form with first axis (X), provided with a brazing zone (200) around the first axis (X) and provided with a diameter (D), and a step of positioning an operative head (5) of a plant (1) for attaining brazing operations defining a work axis (Z) aligned with the first axis (X) of the first component (21). The process also comprises an irradiation step, in which a laser source (3) of the plant (1) is turned on and the operative head (5) generates two working laser beams (70) which intercept the first component (21) in the brazing zone (200), being projected in diametrically opposite positions with respect to the first axis (X), each with a width (L) defined along a direction orthogonal to the work axis (Z), in which the ratio between the width (L) of the working laser beam (70) and the diameter (D) of the first component (21) is greater than or equal to 0.5.

## Description

### Field of application

The present invention regards a brazing process and an assembly, according to the preamble of the respective independent claims.

The assembly and the present process are inserted in the field of working and assembly of components made of metal materials and in particular exploit the laser radiation as energy source for attaining junction brazing operations between such elements.

More in detail, the assembly and the process in accordance with the invention were developed for the assembly of finned heat exchangers, with particular reference to the junction of the closure curves of the hydraulic circuit at the ends of the exchanger pipes, and are therefore intended to be advantageously employed in the industrial fields of climate control, of refrigeration and of treatment of drinks and foods, however also able to find easy use in different industrial fields.

### State of the art

The most widely used technique for the junction of metal components without melting them is the brazing technique. For example, such technique is generally used when the components to be joined require a limited heat supply for the correct operation or when it is important to ensure the tightness or the pressurized sealing of the junction.

The brazing process provides for the supply of a specific alloy, generally indicated as alloy or welding material in the technical jargon of the field, which is provided with a melting temperature lower than the melting temperature of the materials that constitute the components to be joined. Such supply alloy is melted in order to be brought to the liquid state and be widespread therefore via capillarity into the junction slit defined between the components to be joined.

Conventionally, the melting of the supply alloy is attained by means of the use of a flame derived from the combustion of oxygen with hydrocarbons.

The brazing technique briefly described above is used in the field of production and assembly of finned heat exchangers, for joining different components of the hydraulic circuit of the exchangers, as is better described hereinbelow. Such components, once joined, must ensure an optimal hydraulic seal under pressure, as well as an optimal deformation resistance, in particular being subjected to thermal cycles and generally to mechanical stresses.

More in detail, as is known, a finned heat exchanger comprises a plurality of fins, usually made of aluminum or copper, stacked to define a pack and compacted assembly with terminal plates, and one or more coil hydraulic circuits defined by a plurality of pipes, generally made of copper, mounted in the pack and inserted in suitable through holes provided for on the fins. In particular, the hydraulic circuits are made during assembly of the exchangers by means of the insertion of U-bent pipes provided with a length greater than that of the finned pack (known in the technical jargon with the name of hairpins) on the through holes of the fins. Subsequently, the aforesaid hairpins are mechanically expanded in order to be fit to the fins, and the open end of the hairpins themselves is closed by means of the connection of the latter to the so-called return curves, i.e. with C-bent pipe sections, in order to create one or more coil circuits for the passage of the fluid. The heat exchanger is then completed by means of one or more fluid feed or discharge manifolds that connected together the various hydraulic circuits outside the finned pack and that are joined to the free ends of the hairpins that have remained uncoupled.

In particular, the junctions between hairpins and curves and between hairpins, pipes and manifolds are usually attained by means of brazing, as previously specified.

More in detail, such junctions are usually executed with a manual brazing process by means of liquid gas tube. In such process, the welding material is manually employed by the operator assembly to the brazing flame, or it is manually preassembled in ring form around the curves before the brazing process. The aforesaid process therefore provides that the operator manually directs the flame, covering the junction zone in order to cause the melting of the welding material, such that the latter penetrates via capillarity into the junction interstices between hairpins and curves or between pipes or hairpins and manifolds, ensuring the mechanical and hydraulic seal under pressure of the circuit.

A first drawback of such manual brazing process consists of its poor reliability. Indeed, the quality of the brazing operations attains considerably on the ability of the operator, which might not ensure constant and prolonged performances over time.

A second drawback consists of the slowness of the manual process, since the operator must manually execute the above-described operations.

A third drawback lies in the poor safety, the operator being easily exposed to easy accidents/injuries.

A fourth drawback lies in the limits of the support materials employable in such manual process, since the flame employed is unable to reach temperatures greater than a limit value that depends on the specific fuel employed for generating the flame. Therefore, such temperature limit prevents carrying out the brazing with any welding material.

In order to overcome the abovementioned drawbacks of the manual brazing process, various types of brazing processes have been implemented.

For example, an induction brazing process is known which provides for the generation of an intense alternated magnetic field in proximity to the junction zone so that the induced electric currents that are generated in the components to be joined and in the supply alloy due to the alternated magnetic field heat the latter up to causing the melting of the supply alloy.

Nevertheless, even the induction brazing process has in practice shown that it does not lack drawbacks. Indeed, the shape and size constraints of the device for generating the magnetic field render it suitable for only attaining brazed joints having precise size and shape characteristics. In addition, by means of such process, it is difficult to optimally reach the junction zones with the magnetic field generation device, in particular of the hairpins and of the curves, especially for the very tight placements of the hairpins themselves.

Also known are brazing processes which employ laser radiation as energy source for causing the melting of the welding material.

For example, the document DE 102010018687 A1 describes a plant for brazing by means of a laser beam, which provides for distributing the welding material, previously heated by means of magnetic induction, on a work surface being moved above the latter and hence attaining a brazing by means of laser radiation.

In addition, the document EP 3034224 B1 describes a brazing process which provides for carrying out the brazing by means of laser radiation without directly hitting the welding material.

However, a drawback of the use of laser radiation in brazing processes for the assembly of heat exchangers lies in the fact that the laser beam is generally focused, in a point-like manner, on the components to be joined, leaving multiple shadow zones not hit by the laser beam where the supply material is not suitably melted, with a consequent low-quality brazing.

Such circumstance can push to increase the power of the laser, in order to melt the entire welding material, nevertheless considerably increasing the risk of perforating or damaging the components to be joined at the point where they are hit by the laser.

In addition, in order to seek to completely melt the supply material, it is known to move the laser device (by means of an automated robot), making it rotate around the axis of the hairpins, so as to move the laser beam along the entire circumference of the latter. This increases the working times for executing the brazing, with consequent lowering of the efficiency of the production process. In addition, this involves a considerable increase of the design complexity and of the attainment costs. Moreover, the presence the curves to connect the hairpins does not in any case allow the laser beam to travel the entire circumference of the hairpins.

There is therefore the need, in particular in the field of production and assembly of heat exchangers, for a process capable of overcoming the drawbacks of the known brazing techniques mentioned above, in order to obtain a brazing between the junctions between hairpins and curves which are nearly free of defects, in relatively brief times.

### Presentation of the invention

In this situation, the problem underlying the present invention is therefore that of overcoming the drawbacks manifested by the brazing plants of known type, by proving a brazing process and an assembly which allow executing a brazing of optimal quality.

A further object of the present invention is to provide a brazing process and an assembly which allow executing the brazing operations in brief times.

A further object of the present invention is to provide a brazing process and an assembly which are employable in a flexible manner in the production of heat exchangers.

A further object of the present invention is to provide an assembly for attaining brazing operations which is simple, inexpensive and quick to attain.

A further object of the present invention is to provide a brazing process which is entirely reliable.

A further object of the present invention is to provide a brazing process which does not depend on the ability of an operator.

### Brief description of the drawings

The technical characteristics of the invention, according to the aforesaid objects, can be clearly seen in the contents of the below-reported claims and the advantages thereof will be more evident in the following detailed description, made with reference to the enclosed drawings, which represent several merely exemplifying and non-limiting embodiments of the invention, in which:
- figure 1 shows a simplified illustration of an example of a finned heat exchanger provided with hairpins and return curves susceptible of being joined together by means of brazing;
- figure 2 shows a lateral schematic view of a plant for attaining brazing operations employed in the process according to the present invention;
- figure 3a shows a perspective schematic view of a brazing module of the plant of figure 2, in accordance with a first embodiment of the invention;
- figure 3b shows a lateral schematic view of the brazing module of figure 3a;
- figure 4 shows a sectional view of a first component subjected to brazing by means of the plant of figure 2, according to trace IV-IV of figure 3b;
- figure 5a shows a perspective schematic view of a brazing module of the plant of figure 2, in accordance with a second embodiment of the invention;
- figure 5b shows a lateral schematic view of the brazing module of figure 5a;
- figure 6 shows an exploded view of several elements of the brazing module of figure 5a;
- figure 7 shows a front view of the brazing module of figure 5 provided with movement means;
- figure 8 shows the brazing module of figure 7, with an operative head of the module represented in two different positions;
- figure 9a shows a front schematic view of the brazing module, in accordance with a third embodiment of the invention;
- figure 9b shows a top schematic view of the brazing module of figure 9a;
- figure 10 shows a detail of an example of a first and a second component susceptible of being joined together by means of brazing;
- figures 11a, 11b and 11c respectively show three different cross sections of a working laser beam of the plant of figure 2 with the relative impact areas on a first component to be joined.

### Detailed description of a preferred embodiment

With reference to the enclosed drawings, reference number 1 overall indicates a plant employed in the brazing process according to the present invention.

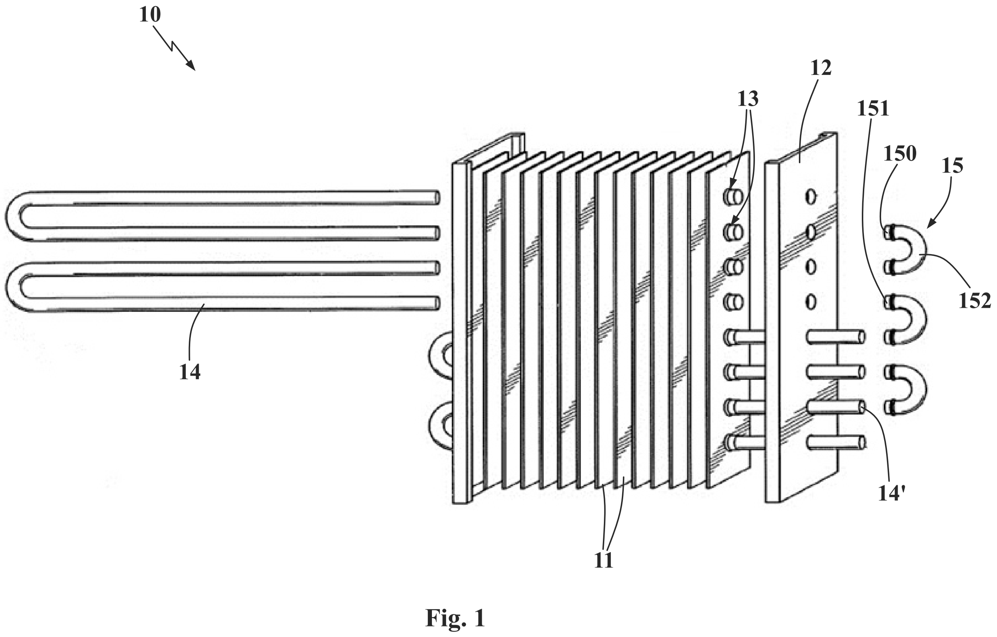

In particular, the plant 1 is intended to be employed in the processes for assembly of finned heat exchangers, such as for example the heat exchanger 10 illustrated merely as an example in the enclosed figure 1.

More generally, the plant 1 is adapted to be used for joining together metal components, at least one of which has tubular form, and is adapted to attain brazing operations along closed and in particular substantially circular junction profiles.

The finned heat exchangers comprise, as is known, a plurality of fins 11, usually made of aluminum or copper, packed to define a pack and compacted assembly with terminal plates 12, and one or more coil hydraulic circuits defined by a plurality of pipes, generally made of copper, mounted in the pack and inserted in suitable through holes 13 provided on the fins 11. In particular, the hydraulic circuits are susceptible of being attained during assembly of the exchangers 10 by means of the insertion of hairpins 14 in the through holes 13 of the fins 11 and the fixing to free ends 14' of the hairpins 14 of return curves 15, in order to create one or more coil circuits for the passage of the fluid. For example, the hairpins 14, the return curves 15 and the tubular connectors have a cross section of external diameter generally comprised between about 5 mm and about 30 mm and walls with thickness usually comprised between 0.4 mm and 1 mm.

The plant 1 according to the present invention is adapted in particular for attaining brazing operations in order to attain the junction between the return curves 15 of the hydraulic circuit and the free ends 14' of the hairpins 14 of the heat exchanger 10, being able to ensure optimal seal properties even under pressure, thermal fatigue strength and mechanical strength of the junctions themselves.

Of course, the plant 1 in accordance with the present invention can be used in order to attain junction brazing operations between hydraulic and mechanical components even different from those mentioned above (e.g. substantially linear piping and/or single connectors, as in the inlet and/or outlet piping of the heat exchanger 10 itself), and also belonging to different fields of the art, without departing from the protective scope defined by the present patent.

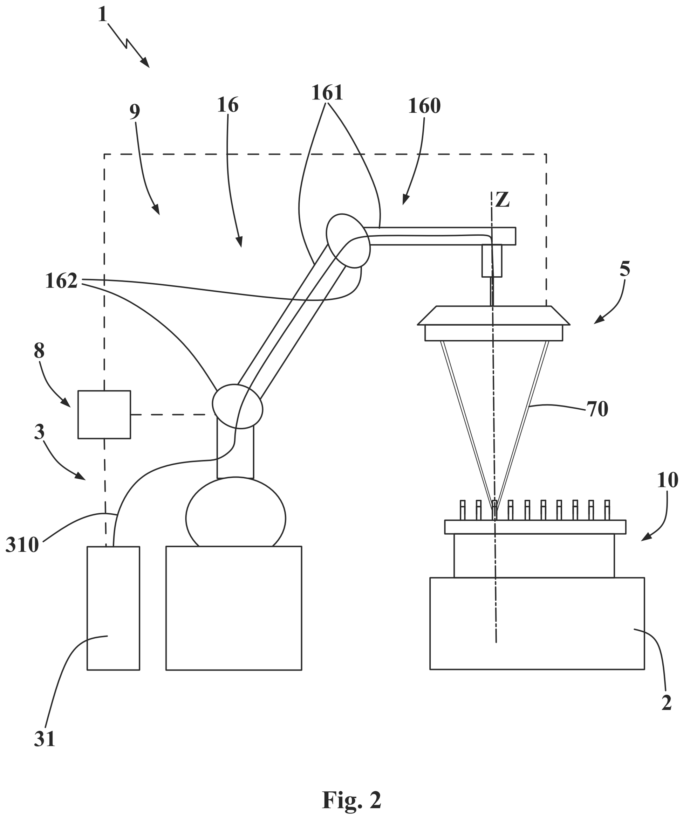

With reference to the example of figure 2, the plant 1 comprises a support element 2, which is arranged for supporting a first component 21, metallic, to be brazed. For example, the first component 21 is made of copper, or of stainless steel, or generally of a metal material suitable for brazing processes.

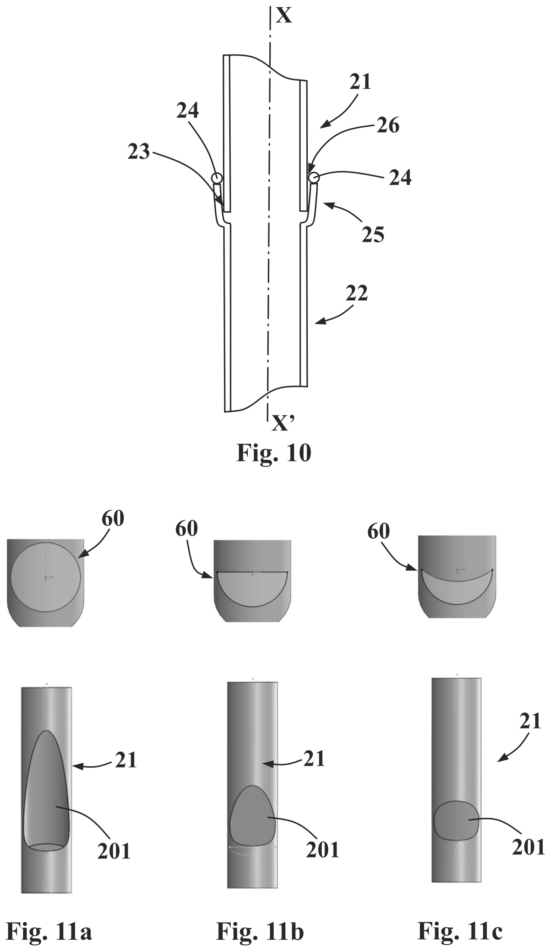

With reference to figure 10, such first component 21 has tubular form with a first axis X thereof, is provided with a brazing zone 200 extended at least around the first axis X itself, and is provided, at least in the brazing zone 200, with a diameter D.

For example, in accordance with the enclosed figures, the first component 21 is a return curve 15 of the heat exchanger 10, which is preferably made of copper.

Advantageously, such return curve 15 is C-shaped, with two end portions 150, 151 (preferably linear) connected to each other by a curved connector section 152.

In particular, the first axis X of the first component 21 corresponds to the axis of the corresponding end portion 150, 151 subjected to brazing.

Advantageously, the support element 2 is arranged for supporting a second component 22, metallic (e.g. made of copper, or of stainless steel, or generally of a metal material suitable for brazing processes) to be joined to the first component 21.

More in detail, such second component 22 has a connection portion 25 placed at the brazing zone 200 of the first component 21, which defines with the latter a junction slit 23.

In particular, the first component 21 is provided with a connection portion and the second component 22 is provided with a corresponding connection end, placed facing the connection portion of the first component 21, between them defining the aforesaid junction slit 23, which is provided with a mouth 26.

Advantageously, the second component 22 has tubular form with a second axis X' thereof placed aligned with the first axis X of the first component 21.

In accordance with the example of figure 10, the second component is formed by a hairpin 14 of the heat exchanger 10.

Preferably, the hairpin 14 is provided with a flared end in order to facilitate the positioning at its interior of the corresponding end portion 150, 151 of the return curve 15.

Of course, without departing from the protective scope of the present patent, the first component 21 can be constituted by a hairpin 14 and the second component 22 can be constituted by a return curve 15.

Advantageously, at the mouth 26 of the junction slit 23, a bead 24 of welding material is arranged, in particular with annular form, and placed at the brazing zone 200 around at least the first axis X of the first component 21.

In particular, the welding material of the bead 24 is provided with a melting temperature lower than the melting temperature of the materials of the first and second components 21, 22, comprising for example silver or copper. More in detail, the bead 24 can be advantageously associated with the first or second component 21, 22 before the latter are coupled, or can be subsequently deposited on the mouth 26 of the junction slit 23.

With reference to the example of figure 2, the support element 2 advantageously comprises a support table or a conveyor belt which supports one or more heat exchangers 10, on which the first and second components 21, 22 are mounted, arranged as discussed above.

The plant 1 also comprises a laser source 3, which is arranged for emitting at least one laser beam 30, preferably collimated, which, in particular, has section (on a plane transverse to its propagation direction) substantially circular or, otherwise, of another form (e.g. quadrangular).

The plant 1 also comprises a brazing module 4 adapted to irradiate the first and/or the second component 21, 22 in order to execute the brazing thereof.

The brazing module 4 comprises at least one operative head 5 which is extended along a transverse direction Y, preferably rectilinear.

Such operative head 5 defines a work axis Z which is orthogonal to the transverse direction Y and along which the first component 21 is intended to be placed, with the first axis X aligned with the work axis Z.

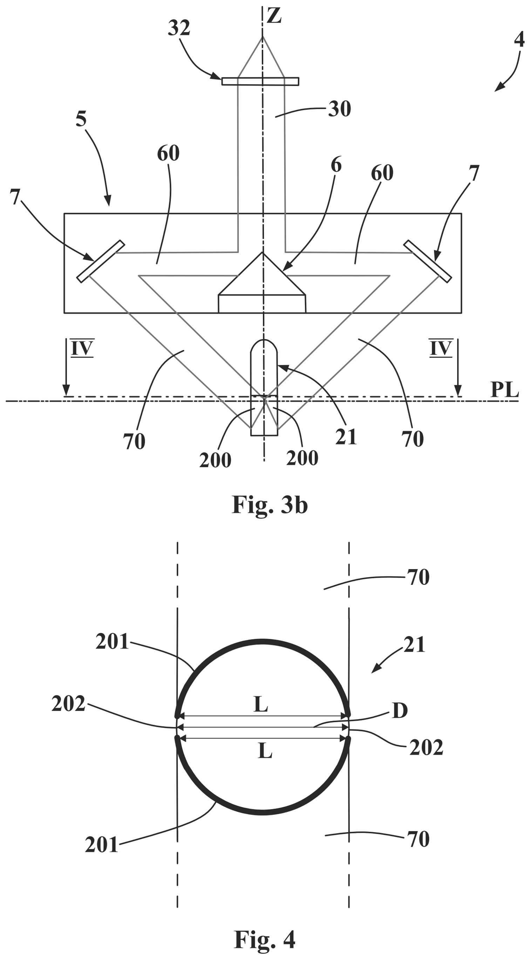

Advantageously, with reference for example to figure 3b, the work axis Z of the operative head 5 defines the symmetry axis of the latter with respect to the transverse direction Y. Otherwise, without departing from the protective scope of the present invention, the work axis Z is misaligned along the direction Y of the operative head 5.

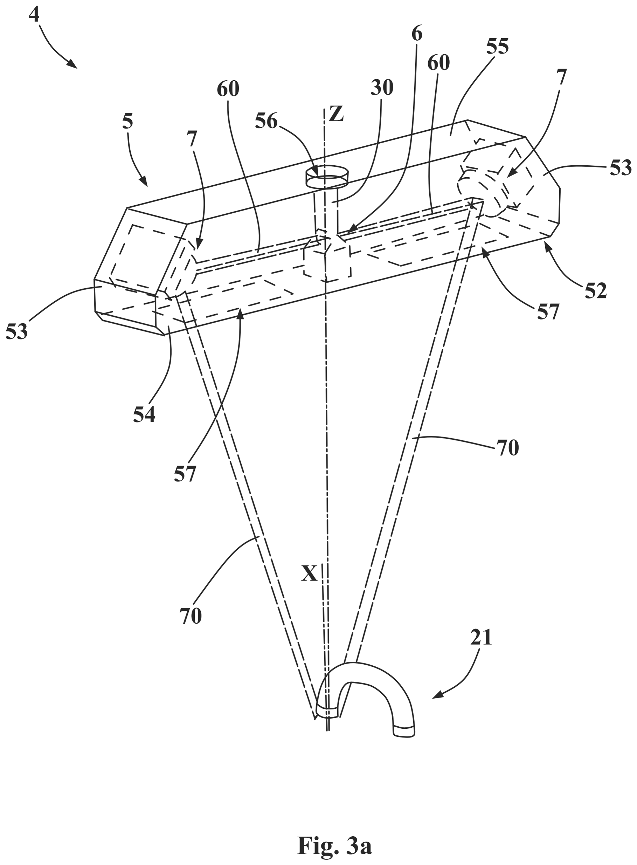

With reference for example to figures 3a and 3b, the operative head 5 comprises a first beam splitter 6, adapted to intercept the laser beam 30 and to divide it into two split laser beams 60, which are propagated away from the work axis Z, preferably in opposite directions along the transverse direction Y of the operative head 5.

The operative head 5 also comprises at least two directing optics 7, which are placed spaced from each other along the transverse direction Y, and preferably spaced from the work axis Z, and in opposite positions with respect to the work axis Z itself, are each adapted to intercept the corresponding split laser beam 60 and to generate a corresponding working laser beam 70.

In accordance with the embodiments illustrated in the enclosed figures, the directing optics 7 comprise corresponding reflection mirrors each adapted to intercept the corresponding split laser beam 60 and to reflect it as the corresponding working beam 70.

Advantageously, each directing optic 7 is adapted to propagate the working laser beam 70 along a propagation direction W incident on the work axis Z with a given incidence angle α, which, in particular, is directed towards the operative head 5. For example, the incidence angle α is comprised between 20° and 70°, and preferably between 30° and 60°.

Each working laser beam 70 is propagated (in particular along its propagation direction W) towards the work axis Z in order to intercept at least the first component 21 in the brazing zone 200, at which the working laser beam 70 has a width L defined along a direction orthogonal to the work axis Z (as illustrated in the example of figure 4).

In particular, each working laser beam 70 intercepts the first component 21 in the brazing zone 200 being projected on a corresponding impact area 201 on the first component 21 itself. In detail, the impact areas 201 are not superimposed on each other and, in particular, they are spaced from each other along the circumference of the cross section of the first component 21.

Preferably, the working laser beams 70 intercept the first component 21 in diametrically opposite portions of the latter with respect to the first axis X, so as to not be superimposed along the circumference of the brazing zone 200 of the first element 21, in order to overheat a wider zone of the brazing zone 200 itself.

More in detail, the impact areas 201 are placed in diametrically opposite positions with respect to the first axis X of the first component 21.

In particular, as illustrated in figure 4, the width L is defined on a plane PL (illustrated in figure 3b) orthogonal to the work axis Z and intersecting the brazing zone 200 of the first component 21. Such width L of the working laser beam 70 corresponds to the maximum width of the corresponding impact area 201.

Advantageously, each working laser beam 70 also intercepts the second component 22, in particular in a relative brazing zone preferably placed at its connection end with a relative impact area.

**In** particular, it is possible that the working laser beam 70 also hits at least part of the brazing bead 24.

In operation, the working laser beam 70 causes the heating of the first component 21 at least in the brazing zone 200, determining the melting of the bead 24, which consequently penetrates via capillarity into the junction slit 23 between the first and the second component 21, 22 (in a per se known manner).

The ratio between the width L of the working laser beam 70 and the diameter D of the first component 21 is greater than or equal to 0.5.

Such configuration allows the working laser beam 70 to suitably melt the welding material of the bead 24 without excessively overheating the impact areas 201 and hence without the risk of damaging (e.g. perforating) the first metal component 21. Indeed, the aforesaid ratio (between width L of the working laser beam 70 and the diameter D of the first component 21) allows distributing the heat in the impact area 201, without bringing it to excessively high temperatures.

Advantageously, the ratio between the width L of the working laser beam 70 and the diameter D of the first component 21 is less than 1.2, in particular such to limit the section of the working laser beam 70 which does not impact the first component 21.

**In** accordance with a particular embodiment of the present invention, the ratio between the width L of the working laser beam 70 and the diameter D of the first component 21 is less than 1 (while remaining greater than 0.5).

**In** accordance with this embodiment (illustrated for example in figure 4), the impact areas 201 are separated from each other by non-irradiated areas 202 of the first component 21 which are not hit by the working laser beam 70. In this manner, each working laser beam 70 directly heats the corresponding impact area 201 of the first component 21, from which the heat is transmitted, via conduction, to the non-irradiated areas 202 adjacent thereto. In such condition, therefore, the heat reaches each non-irradiated area 202, also being propagated from its opposite flanks (adjacent to the impact areas 201) towards the interior of the non-irradiated area 202 itself. In this situation, the aforesaid ratio between width L of the working laser beam 70 and the diameter D of the first component 21 ensures that the heat generated in the impact areas 201 is such to heat the first component 21 itself at least at the brazing zone 200, to a temperature such to ensure the melting of the welding material of the bead 24, being transmitted via conduction, also completely the non-irradiated areas 202, to a temperature such to ensure the melting of the welding material of the bead 24 also at such non-irradiated areas 202.

Advantageously, the ratio between the width L of the working laser beam 70 and the diameter D of the first component 21 is greater than 0.7.

**In** this manner, the bead 24 is melted in a more uniform manner, coming to be inserted in the junction slit 23 and therefore more quickly leading to the joining of the first component 21 to the second component 22.

Advantageously, in accordance with the preferred embodiment illustrated in the enclosed figures, the working laser beam 70 is collimated.

Otherwise, in accordance with a different non-illustrated embodiment variant, each working laser beam 70 is focused, in particular with a focal point spaced from the first component 21, and more in detail from the brazing zone 200, such that the width L of the working laser beam 70 meets the aforesaid ratio with respect to the diameter D of the first component 21. In particular, the focal points of the two working laser beams 70 are distinct from each other and, in detail, placed on opposite sides with respect to the first axis X. Advantageously, the focus of the working laser beam 70 can be placed between the corresponding directing optic 7 and the first component 21, or it can be placed beyond such first component 21 (with the latter that results positioned between the directing optic 7 and the focus). Preferably, in such embodiment variant, the operative head 5 comprises one or more focal lenses, arranged for focusing the working laser beam 70.

Advantageously, the plant 1 comprises a control unit 8 operatively connected to the laser source 3 so as to actuate the latter to generate the laser beam 30.

Advantageously, the plant 1 comprises a movement device 9, which carries the brazing module 4 mounted thereon and is adapted to position the operative head 5 in multiple operative positions, in each of which the operative head 5 placed with the work axis Z aligned with a corresponding first component 21, and in particular with its first axis X, so as to execute the brazing on such first component 21 as described above.

Advantageously, the movement device 9 comprises at least one robot 16 or, otherwise, a Cartesian movement system, provided with one or more movement arms 160, each comprising a plurality of elements 161, known in the technical jargon with the name link, connected to each other by means of kinematic joints 162, known in the technical jargon with the name joint.

In particular, the brazing module 4 is mounted on the robot 16, with the movement arm 160 that is movable in order to position the work axis Z of the operative head 5 aligned with the first axis X of the first component 21.

More in detail, the robot 16 can be provided with any one combination of main joints for the precise spatial positioning of the brazing module 4, in particular with respect to the first component 21. Preferably, in addition, the robot 14 can be provided with one or more secondary joints for the precise spatial orientation, with respect to the first component 21, of the brazing module 4, in particular allowing yaw, roll and pitch of the operative head 5.

Advantageously, the movement device 9 is operatively connected to the control unit 8, which controls the movement thereof.

In particular, the control unit 8 actuates the movement device 9 to place the brazing module 4, in succession, at each return curve 15 of the heat exchanger 10, by means of successive step movements.

Optionally, the control unit 8 is at least partially integrated in the movement device 9, e.g. integrated in a control module of the latter (suitably programmed), and is arranged for controlling the turning on or off of the laser source 3 as a function of the movement of the movement device 9 itself.

Advantageously, the control unit 8 is settable to ensure that the robot 16 completes a desired cycle of brazing operations, for example by moving the operative head 5 with respect to the first and second component 21, 22 in order to attain the junction brazing therebetween and/or for example spatially moving operative head 5 so that the latter reaches further components to be joined.

More in detail, the control unit 8 is arranged for actuating the movement device 9 between a positioning state, in which the movement device 9 places the operative head 5 of the brazing module 4 stationary with respect to the support element 2 in an operative position, and a transition state, in which the movement device 9 moves the operative head 5 between two operative positions.

In other words, the brazing through the working laser beams 70 which impact the first component 21, and preferably also the second component 22 and the bead 24, is executed in a static manner, i.e. with the operative head 5 of the brazing module 4, and in particular also the working laser beams 70, stopped with respect to the first component 21.

Advantageously, the control unit 8 is arranged for turning on the laser source 3 when the movement device 9 is in the positioning state, and for turning off the laser source 3 when the movement device 9 is in the transition state.

In this manner, during the transition state the plant 1 does not emit any working laser beam 70 towards the support element 2, avoiding accidentally hitting components of the heat exchanger 10 placed on the latter and, moreover, with an energy savings in the work process.

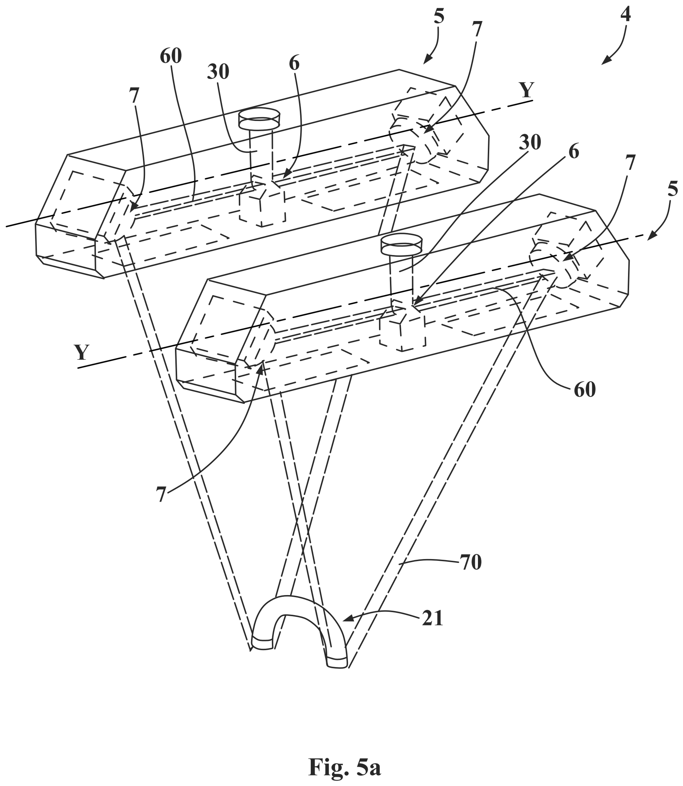

Advantageously, the operative head 5 (in accordance with the examples of figures 3a and 5a) comprises a containment body 52, internally hollow, at whose interior the first beam splitter 6 and the two directing optics 7 are placed.

In particular, the containment body 52 is extended with elongated form along the transverse direction Y between two opposite lateral walls 53, which are connected to each other by a lower wall 54, intended to be placed directed towards the first component 21, and an opposite upper wall 55 (provided with a passage opening 56 in order to allow the laser beam 30 to enter into the containment body itself).

Preferably, the first beam splitter 6 is placed between the upper wall 55 and the lower wall 54 at a symmetry axis of the containment body 52 of the operative head 5 with respect to the transverse direction Y, and such symmetry axis preferably coincides with the work axis Z.

Advantageously, the lower wall 54 of the containment body 52 is provided with two passage windows 57, made on the latter along the transverse direction Y, in particular mirrored with respect to the symmetry axis, which are arranged for allowing the passage of the working laser beams 70 from the respective directing optics 7 towards the brazing zone 200 of the first component 21.

In particular, each passage window 57 is closed by a protection glass, which is susceptible of being traversed by the working laser beam 70 and, simultaneously, prevents the entrance of fumes within the containment body of the operative head 5.

Advantageously, in accordance with a first embodiment of the invention (illustrated in the example of figures 3a and 3b), the brazing module 4 comprises (only) one operative head 5. For example, with such first embodiment, the brazing module 4 acts on only one hairpin 14 at a time in order to braze it at the corresponding free end 14' of the return curve 15.

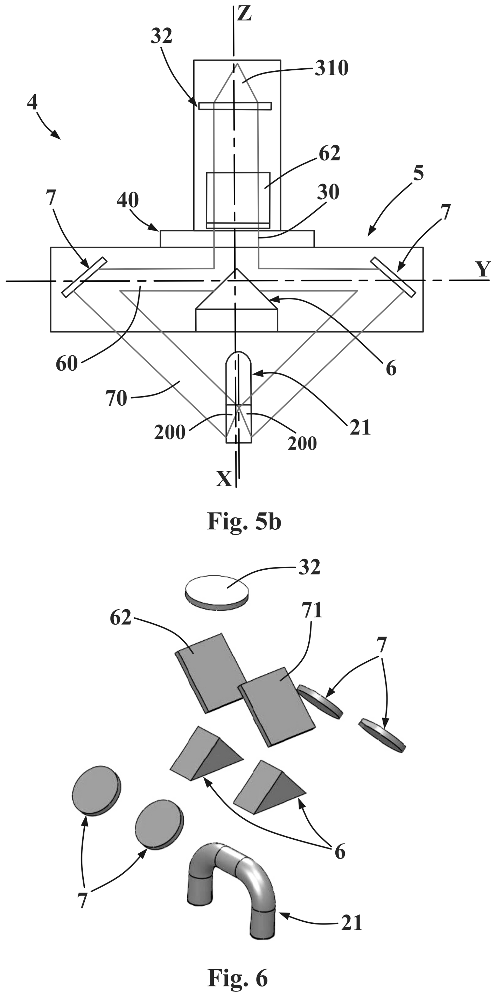

Advantageously, in accordance with a second embodiment of the plant 1 illustrated in figures 5 -8, the brazing module 4 comprises at least two operative heads 5, placed side-by-side each other and with the respective transverse directions Y parallel to each other.

In operation, the two operative heads 5 are placed with the respective work axes Z aligned with the first axes X of two first components 21, and such first axes X are for example the axes of the two end portions 150, 151 of a return curve 15 of the heat exchanger 10 to be joined to the corresponding hairpins 14.

Advantageously, the laser source 3 comprises a laser emitter 31 arranged for emitting at least one primary laser beam 310.

In particular, the laser emitter 31 is placed spaced from the brazing module 4, for example alongside the movement device 9, and is preferably optically coupled to the brazing module 4 by means of one or more transport optical fibers.

Advantageously, the laser source 3 comprises a collimation module 32, which is arranged for intercepting the primary laser beam 310 and generating a collimated primary laser beam 310.

Advantageously, the laser source 3 comprises a second beam splitter 62, placed between the collimation module 32 and the first beam splitters 6 of the operative heads 5 and adapted to intercept the primary laser beam 310, preferably collimated, and divide it into two laser beams 30, each of which propagated towards the first beam splitter 6 of the corresponding operative head 5.

In this manner, the primary laser beam 310, preferably collimated (coming from the collimation module 32) and divided by the second beam splitter 62 in order to propagate the two laser beams 30 thus obtained towards the corresponding operative heads 5. In the latter, each laser beam 30 is in turn divided into two split laser beams 60, from which the corresponding working laser beams 70 (as discussed above) are obtained to be projected onto the corresponding first component 21.

Preferably, the collimation module 32 and the second beam splitter 62 of the laser source 3 are arranged at the or on the brazing module 4 (for example on one of the operative heads 5), in accordance for example with the embodiment of figure 5b. In accordance with different embodiments, one or both between the collimation module 32 and the second beam splitter 62 are arranged spaced from the brazing module 4, for example at the laser emitter 31.

Advantageously, the collimation module 32 comprises an optical system, which is placed to intercept the primary laser beam 310 and is arranged in order to vary the transverse size of the latter (and hence its width). For example, such optical system comprises a dioptric group formed with multiple lenses in succession, which in particular is provided with convergent and divergent optical lenses placed in succession with the possibility to vary the distances between them in order to vary the width of the primary laser beam 310.

In this manner, the plant 1 is capable of executing the brazing simultaneously on two first components 21, for example on the two end portions 150, 151 of a return curve 15.

In particular, such configuration allows using only one laser emitter 31, obtaining four working laser beams 70 that hit two different first components 21, with a considerable cost savings.

Preferably, the second beam splitter 62 is placed at one of the two operative heads 5, in particular in proximity to the upper wall 55 of the containment body 52 of the latter.

Advantageously, the other operative head 5 comprises a directing module of the laser beam 71 (e.g. comprising a suitable mirror), which intercepts the corresponding laser beam 30 and orients it towards the corresponding first beam splitter 6. For example, such directing module 71 is placed in proximity to the upper wall 55 of the containment body 52 of the operative head 5 itself, preferably at the same height as the second beam splitter 62, i.e. they are placed on a same plane orthogonal to the work axis Z. In particular, the two laser beams 30 are propagated by the second beam splitter 62 along directions transverse to each other (and more particularly orthogonal to each other), including one towards the first beam splitter 6 of one of the operative heads 5 and the other towards the directing module 71 of the other operative head 5.

In a preferred configuration, the laser emitter 31 emits the primary laser beam 310, which is collimated by the collimation module 32, then divided by the second beam splitter 62 into two laser beams 30, one orthogonal with respect to the other, e.g. one vertical (parallel to the work axis Z) and the other horizontal (orthogonal to the work axis Z). In particular, the horizontal laser beam 30 is directed parallel to the work direction Z of the corresponding operative head 5, and preferably parallel to the other laser beam 30, by the directing module of the laser beam 71.

Advantageously, each laser beam 30 in the corresponding operative head 5 is divided by the first beam splitter 6 into two split laser beams 60, preferably orthogonal to the laser beam 30, which are directed along a same direction, but with opposite senses, up to a corresponding directing optic 7, from which each work laser beam 70, with a width L greater than or equal to half the diameter D of the first component 21, exits from the corresponding work head 5 and intercepts the corresponding first component 21 in the brazing zone 20.

In particular, the second and the first beam splitters 62, 6 respectively divide the primary laser beam 310 and the two laser beams 30 into laser beams 30 and split laser beams 60 of equal power. Advantageously, the laser emitter 31 has power comprised between 1 kW and 6 kW, preferably between 1 kW and 3 kW in the first embodiment (with brazing module 4 at only one operative head 5), and preferably between 1 kW and 5 kW in the second embodiment (with brazing module 4 with two operative heads 5).

Advantageously, the first beam splitter 6 (and preferably the second beam splitter 62) is of reflecting or dichroic type.

For example, in the embodiments illustrated in the enclosed figures, the first beam splitter 6 is of reflecting type and the second beam splitter 62 is of dichroic type.

Preferably, the first beam splitter 6 (of reflecting type, e.g. in prism form with triangular section) comprises two reflecting surfaces, tilted with respect to each other, which are joined at a vertex line, which is arranged for intercepting the laser beam 30 in a manner such that half of the section of the latter hits one of the reflecting surfaces and the other half hits the other reflecting surface. In particular, the two reflecting surfaces are arranged for reflecting the corresponding half of the laser beam 30 in opposite senses parallel to the transverse direction Y of the operative head 5, towards the corresponding directing optics 7.

Advantageously, in the event in which the laser beam 30 has circular section, the first beam splitter 6 (of reflecting type) is arranged for generating the two split laser beams 60 with semicircular section (as in the example of figure 11b), e.g. by arranging the aforesaid reflecting surfaces with flat form. Such section of the split laser beams 60 involves the formation of working laser beams 70 that are projected onto the brazing zone 200 with impact area 201 (illustrated in the example of figure 11b) having shorter extension along the first axis X of the first component 21, with respect to the impact area generated by a laser beam with circular section (illustrated in the example of figure 11a). In this manner, the impact area 201 is mainly distributed (and preferably completely distributed) within the brazing zone 200, preventing power dispersions of the working laser beam 70 into zones far from the brazing zone 200, with consequent energy savings.

Advantageously, in the event in which the laser beam 30 has circular section, the first beam splitter 6 (of reflecting type) is arranged for generating the two split laser beams 60 with crescent moon section (as in the example of figure 11c), e.g. by suitably shaping (in particular with concave or convex form) the reflecting surfaces. Such section of the split laser beams 60 involves the formation of working laser beams 70 which are projected onto the brazing zone 200 with impact area 201 (illustrated in the example of figure 11c) having extension even shorter along the first axis X of the first component 21, with consequent further energy savings.

Advantageously, the first beam splitter 6 (and preferably the second beam splitter 62) is configured for dividing the laser beam 30 (and the primary laser beam 310, respectively) by means of power splitting or phase splitting.

In particular, in the case of phase splitting, the laser beam 30 (and preferably the primary laser beam 310) comprises two polarized components, one in phase quadrature with respect to the other, which are divided into the two corresponding polarized components. More in detail, the first beam splitter 6 (and preferably the second beam splitter 62), in particular of dichroic form, is arranged for letting one of the two polarized components pass, reflecting the other, and in this manner dividing the laser beam 30 (and preferably the primary laser beam 310, respectively) into two polarized laser beams.

Preferably, the primary laser beam 310 (generated by the laser emitter 31) has wavelength in a specific spectral band, which in particular can be in the visible or invisible spectrum.

For example, the primary laser beam 310 has wavelength in the blue light spectrum or in the green light spectrum. In particular, the primary laser beam 310 has wavelength comprised between 400 and 500 nm in the event in which it is arranged for emitting blue light, and between 485 and 585 nm in the event in which it is arranged for emitting green light.

Such application, advantageously, is particularly efficient in the event in which the first component 21 and the second component 22 are made of copper, since such material has an improved capacity of absorption of blue and green light.

In accordance with a different embodiment, the primary laser beam 310 has wavelength in the infrared spectrum. Such application, advantageously, is particularly efficient in the event in which the first and the second component 21, 22 are made of stainless steel, since such material has an improved capacity of absorption of infrared radiation.

Advantageously, the first beam splitter 6 (if of reflecting type), and/or the second beam splitter 62 (if of reflecting type), and/or the directing optics 7 are provided with a reflecting coating which is provided with a high reflectance (in particular greater than 90%) in the wavelength of the primary laser beam 310. In this manner, advantageously, the aforesaid components are capable of reflecting most of the laser radiation that hits them, with consequent increase of efficiency and lower risk of overheating the brazing module 4.

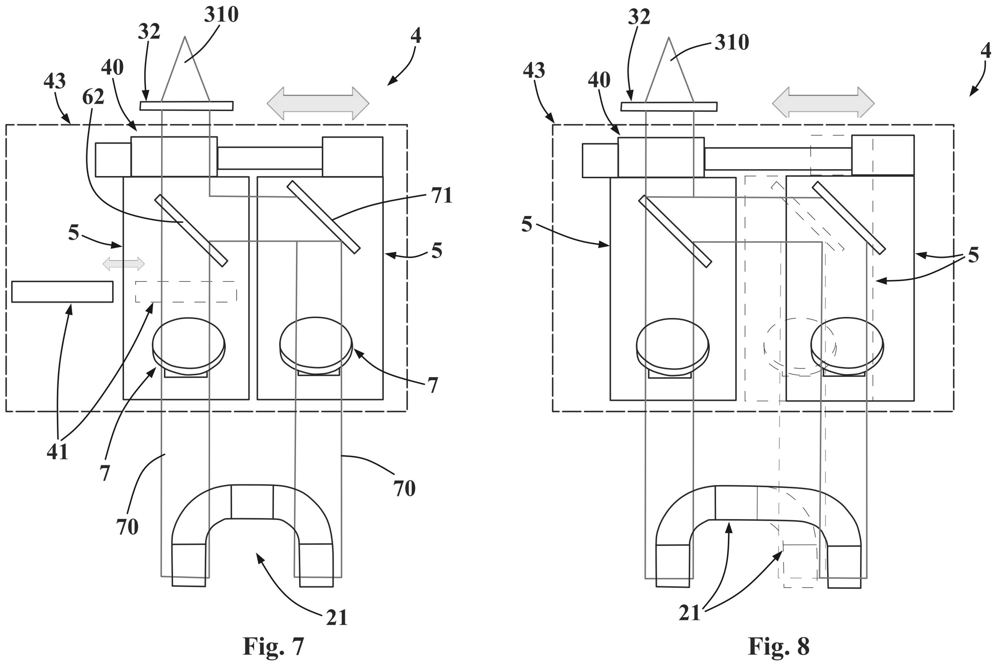

Advantageously, in accordance with the second embodiment illustrated in figures 7 and 8, the brazing module 4 comprises movement means 40 which are mechanically connected to at least one of the operative heads 5 and are actuatable for moving it orthogonal to the transverse direction Y in order to vary the distance between the operative heads 5.

In particular, the brazing module 4 comprises a containing case 43, which is hollow and contains the operative heads 5 at its interior.

In this manner, it is possible to regulate the pitch between the two operative heads 5, so as to adapt them to operate on products with different dimensions and/or geometries. For example, it is possible to adjust the distance between the two operative heads 5 as a function of the distance between the two hairpins 14 to be joined together by means of the correspondingly sized return curve 15, so as to be able to adapt the plant 1 for producing heat exchangers with different configurations and geometries.

Advantageously, the movement means 40 are operatively connected to the control unit 8 which is arranged for controlling the actuation thereof (for example following control by a user).

For example, the movement means 40 comprise at least one linear actuator having extension direction orthogonal to the transverse direction Y of the operative heads 5 and the work axis Z and, preferably, connected to the two operative heads 5 in order to actuate one of them to be moved with respect to the other.

Advantageously, the brazing module 4 comprises a radiation absorber element 41 (schematically illustrated in figure 7), which is placed between the second beam splitter 62 and the first beam splitter 6 of one of the operative heads 5, and is movable between an interference position (illustrated with dashed line in figure 7), in which the radiation absorber element 41 intercepts the laser beam 30 coming from the second beam splitter 62 to block the propagation thereof the first beam splitter 6, and a non-interference position (illustrated with solid line in figure 7), in which the radiation absorber element 41 is spaced from the laser beam 30.

Such configuration, advantageously, allows disabling one of the two operative heads 5 (from emitting the working laser beams 70), leaving the other operative head 5 operative (always maintaining the laser emitter 31 turned on).

This in particular allows executing brazing operations if it is necessary to operate with only one operative head 5, without the other operative head 5 projecting laser radiations in zones which can damage other components of the heat exchanger 10 or of the work environment (ensuring optimal safety conditions for the operators).

For example, in operation, when the brazing module 4 must operate on only one hairpin 14 (or on another element of the heat exchanger 10) placed along the perimeter or an angle of the heat exchanger 10, and the plant 1 must attain therefore only one brazing, the radiation absorber element 41 blocks the propagation of the laser beam 30 (coming from the second beam splitter 62) towards the non-used operative head, allowing the other operative head 5 to operate regularly.

Preferably, the radiation absorber element 41 comprises an interference portion (coated for example with high absorbance material with respect to the wavelength of the laser beam 30) and an actuator mechanically connected to the interference portion and operatively connected to the control unit 8 in order to control the movement of the interference portion between the interference position and the non-interference position.

Advantageously, the operative head 5 comprises tilt means 50 mechanically connected to the directing optics 7 and actuatable for moving the latter in order to vary the propagation directions W, and hence the aforesaid incidence angle α.

In this manner, the working laser beam 70 can be correctly directed towards the brazing zone 200 of the first component 21, in particular in the event in which the distance between the latter and the operative head 5 of the plant 1 varies.

In particular, the tilt means 50 are operatively connected to the control unit 8, in order to be controlled by the latter to vary the propagation directions W of the corresponding working laser beams 70.

More in detail, each directing optic 7 comprises a tiltable mirror, which is rotatable around a first tilt axis T' orthogonal to the transverse direction Y of the operative head 5 and to the work axis Z, so as to be able to vary the aforesaid incidence angle α.

Advantageously, the tilt means 50 comprise in addition an actuator mechanism 51 mechanically connected to the tiltable mirror of the corresponding directing optic 7 in order to rotate it around the tilt axis.

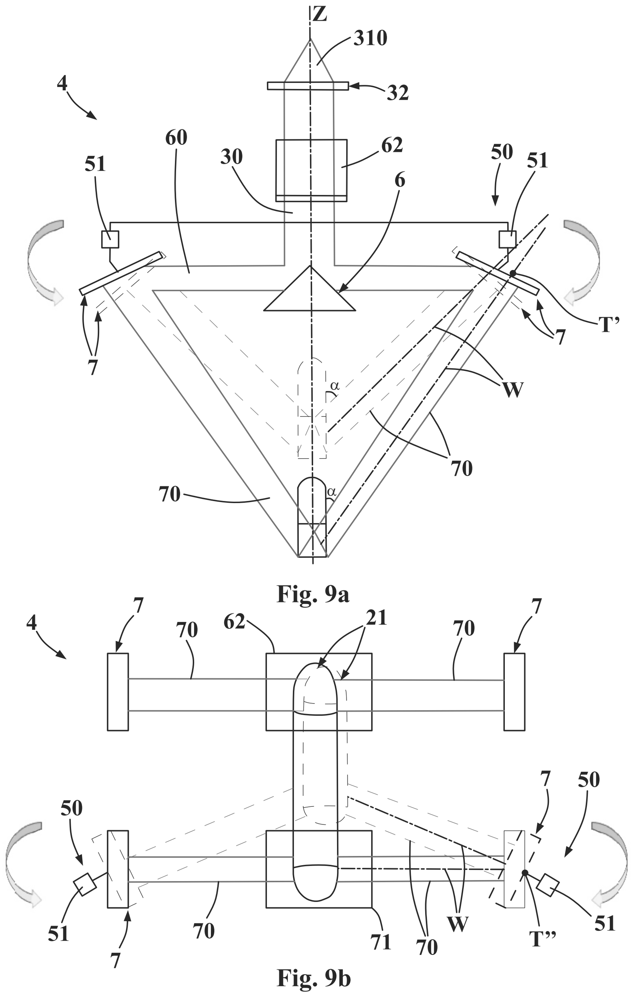

Advantageously, with reference to figure 9b, the tilt means 50 are actuatable for moving the directing optics 7 so as to vary the propagation directions W around a second tilt axis T" parallel to the work axis Z.

Due to such characteristic, if the first component 21 has particularly small dimensions (in particular in terms of distance between the end portions 150, 151) such to not allow the movement means 40 to place the operative heads 5 at the respective brazing zones 200, due for example to the bulk of the operative heads 5 themselves, the tilt means 50 allow directing the working laser beams 70 of at least one of the two operative heads 5 towards the corresponding brazing zones 200 of the first component 21, by rotating respective directing optics 7 around the second tilt axis T", in this manner increasing the flexibility of use of the plant 1, rendering it suitable for executing brazing operations on components of different size.

Also forming the object of the present invention is an assembly comprising a plant 1 of the above-described type and the aforesaid first component 21.

Described hereinbelow is the present brazing process for joining two metal components 21, 22, by means of a plant 1 of the above-described type. The process comprises a step of arranging a first component 21, metallic, with tubular form with first axis X, provided with a brazing zone 200 extended at least around the first axis X, and provided, at least in the brazing zone 200, with a diameter D.

The present process also comprises a step of arranging a second component 22, metallic, having a connection portion 25 placed at the brazing zone 200 of the first component 21, defining with the latter a junction slit 23, and a step of arranging a bead 24 of welding material on the mouth 26 of the junction slit 23.

The present process also comprises a step of positioning the operative head 5 of the brazing module 4 with the work axis Z aligned with the first axis X of the first component 21 and an irradiation step, in which the laser source 3 is turned on and the operative head 5 generates two working laser beams 70, which are propagated towards the work axis Z to intercept at least the first component 21 in the brazing zone 200, being projected on two corresponding impact areas 201 placed in diametrically opposite positions with respect to the first axis X of the first component 21.

In addition, in the present brazing process following the aforesaid irradiation, the bead 24 at least partially melts, penetrating into the junction slit 23.

In the irradiation step, at the brazing zone 200, each working laser beam 70 has a width L defined along a direction orthogonal to the work axis Z, with the ratio between the width L of the working laser beam 70 and the diameter D of the first component 21 greater than or equal to 0.5 (and preferably less than 1.2).

In this manner, the working laser beam 70 directly heats at least the first component 21 at the impact areas 201, and preferably also the second component 22 and, possibly, the bead 24.

In particular, in the event in which the aforesaid ratio is less than 1, the impact areas 201 of the first component 21 heat, at least via conduction, the non-irradiated areas 202 of the first component 21 which are not hit by the working laser beam 70.

Advantageously, the first component 21 heated by the working laser beam 70 at least in its brazing zone 200 transmits the heat at least via conduction to the bead 24 up to melting it, which, by penetrating via capillarity into the junction slit 23 and subsequently solidifying, allows obtaining the joining between the first component 21 and the second component 22 by means of the present brazing process.

Advantageously, the duration of the irradiation step is established as a function of the type of material with which the components 21, 22 to be joined are attained, i.e. as a function of the specific capacity of the latter to absorb the energy supplied by the working laser beam 70. More in detail, the irradiation step is in any case extended for a time sufficient so that the components to be joined absorb from the working laser beam 70 the quantity of energy necessary to cause a suitable heating thereof and to cause the consequent melting of the welding material of the bead 24.

Advantageously, in the present process, the ratio between the width L of the working laser beam 70 and the diameter D of the first component 21 is greater than 0.7.

In this manner, the bead 24 is melted in a more uniform manner, coming to be inserted in the junction slit 23 and therefore more quickly leading to the junction of the first component 21 with the second component 22.

In this manner, the working laser beam 70 is completely intercepted by the first component 21 in the brazing zone 20, with a considerable savings of energy and a lower risk of damaging the components of the heat exchanger 10, which could in particular be accidentally hit by the working laser beam 70, even in the event in which the latter are not perfectly aligned with the width L thereof at the first axis X of the first component 21.

Advantageously, in the present process, the operative head 5 is moved, in succession, in multiple operative positions, in each of which the operative head 5 is placed stationary, with respect to the support element 2, with the work axis Z aligned with a corresponding first component 21.

In particular, during the brazing the operative head 5 is stationary, and, therefore, the working laser beam 70 is static, hitting the brazing zone 200 of the first component 21 without there being a relative motion between the first component 21 and the working laser beam 70, therefore resulting in a simple and easy process to execute.

Advantageously, the laser source 3 is turned on when the operative head 5 is stationary in the operative position and is turned off when the operative head 5 is moved from an operative position to the subsequent operative position.

In this manner, the brazing of the first and second components 21, 22 is attained in an efficient and precise manner, avoiding accidentally hitting components of the heat exchanger 10 placed on the latter and more achieving an energy savings in the work process.

The invention thus conceived therefore attains the pre-established objects.

## Claims

1. Brazing process for joining two metal components (21, 22) by means of a plant (1) comprising:
- a support element (2), which is arranged for supporting a first component (21);
- a laser source (3), which is arranged for emitting at least one laser beam (30);
- a brazing module (4), which comprises at least one operative head (5), which is extended at least along a transverse direction (Y) and defines a work axis (Z) which is orthogonal to said transverse direction (Y) and along which said first component (21) is intended to be placed;
said operative head (5) comprising:
- a first beam splitter (6), adapted to intercept said laser beam (30) and to divide it into at least two split laser beams (60), which are propagated away from said work axis (Z);
- at least two directing optics (7), which are placed spaced from each other along said transverse direction (Y) and in opposite positions with respect to said work axis (Z), are each adapted to intercept the corresponding said split laser beam (60) and to generate a corresponding said working laser beam (70), which is propagated towards said work axis (Z) in order to intercept at least said first component (21);
said process comprising the following operating steps:
- a step of arranging said first component (21), which is metallic, with tubular form with first axis (X), provided with a brazing zone (200) extended at least around said first axis (X), and is provided, at least in said brazing zone (200), with a diameter (D);
- a step of arranging a second component (22), metallic, having a connection portion (25) placed at the brazing zone (200) of said first component (21), defining with the latter a junction slit (23);
- a step of arranging a bead (24) of welding material on a mouth (26) of said junction slit (23);
- a step of positioning the at least one operative head (5) of said brazing module (4) with said work axis (Z) aligned with the first axis (X) of said first component (21);
- an irradiation step, in which said laser source (3) is turned on and said operative head (5) generates two working laser beams (70), which are propagated towards said work axis (Z) to intercept at least said first component (21) at least in said brazing zone (200), being projected on two corresponding impact areas (201) placed in diametrically opposite positions with respect to the first axis (X) of said first component (21);
in which, following said irradiation, said bead (24) at least partially melts, penetrating into said junction slit (23);
wherein, in said irradiation step, at said brazing zone (200) each said working laser beam (70) has a width (L) defined along a direction orthogonal to said work axis (Z);
wherein the ratio between the width (L) of said working laser beam (70) and the diameter (D) of said first component (21) is greater than or equal to 0.5.

2. Brazing process according to claim 1, **characterized in that** the ratio between the width (L) of said working laser beam (70) and the diameter (D) of said first component (21) is greater than 0.7.

3. Brazing process according to claim 1 or 2, **characterized in that** said operative head (5) is moved, in succession, into multiple operative positions, in each of which said operative head (5) is placed stationary, with respect to said support element (2), with said work axis (Z) aligned with a corresponding said first component (21);
wherein said laser source (3) is turned on when said operative head (5) is stationary in said operative position and is turned off when said operative head (5) is moved from a said operative position to the subsequent said operative position.

4. Brazing process according to claim 3, **characterized in that** said plant (1) comprises:
- a control unit (8) operatively connected to said laser source (3);
- a movement device (9), which carries said brazing module (4) mounted thereon, positions said operative head (5) in multiple said operative positions and is operatively connected to said control unit (8), which actuates said movement device (9) between:
- a positioning state, in which said movement device (9) places said operative head (5) stationary with respect to said support element (2) in a said operative position, and
- a transition state, in which said movement device (9) moves said operative head (5) between two said operative positions;
wherein said control unit (8) turns on said laser source (3) when said movement device (9) is in said positioning state, and turns off said laser source (3) when said movement device (9) is in said transition state.

5. Brazing process according to any one of the preceding claims, **characterized in that** the brazing module (4) of said plant (1) comprises at least two operative heads (5), placed side-by-side each other and with the respective said transverse directions (Y) parallel to each other;
wherein said laser source (3) comprises:
- a laser emitter (31), which emits at least one primary laser beam (310);
- a collimation module (32), which intercepts said primary laser beam (310) and generates at least one collimated primary laser beam (310);
- a second beam splitter (62), placed between said collimation module (32) and the first beam splitters (6) of said operative heads (5), which intercepts said collimated primary laser beam (310) and divides said collimated primary laser beam (310) into two said collimated laser beams (30), each of which is propagated towards the first beam splitter (6) of the corresponding said operative head (5).

6. Brazing process according to claim 5, **characterized in that** the brazing module (4) of said plant (1) comprises movement means (40), which are mechanically connected to at least one of said operative heads (5) and are actuated for moving it orthogonal to said transverse direction (Y) in order to vary the distance between said operative heads (5).

7. Brazing process according to claim 5 or 6, **characterized in that** the brazing module (4) of said plant (1) comprises a radiation absorber element (41), which is placed between said second beam splitter (62) and the first beam splitter (6) of one said operative head (5), and is moved between an interference position, in which said radiation absorber element (41) intercepts said laser beam (30) coming from said second beam splitter (62) to block the propagation thereof said first beam splitter (6), and a non-interference position, in which said radiation absorber element (41) is spaced from said laser beam (30).

8. Brazing process according to any one of the preceding claims, **characterized in that**:
- each said directing optic (7) propagates said working laser beam (70) along a propagation direction (W) incident on said work axis (Z) with a given incidence angle (α);
- said at least one operative head (5) comprises tilt means (50) mechanically connected to said directing optics (7) and actuated for moving said directing optics (7) in order to vary said propagation directions (W).

9. Assembly which comprises:
- a plant (1) for attaining brazing operations;
- a first component (21);
said plant (1) comprising:
- a support element (2), which is arranged for supporting said first component (21), which is metallic, with tubular form with first axis (X), is provided with a brazing zone (200) extended at least around said first axis (X), and is provided, at least in said brazing zone (200), with a diameter (D);
- a laser source (3), which is arranged for emitting at least one laser beam (30);
- a brazing module (4), which comprises at least one operative head (5), which is extended at least along a transverse direction (Y) and defines a work axis (Z) which is orthogonal to said transverse direction (Y) and along which said first component (21) is intended to be placed, with said first axis (X) aligned with said work axis (Z);
said operative head (5) comprising:
- a first beam splitter (6), adapted to intercept said laser beam (30) and to divide it into at least two split laser beams (60), which are propagated away from said work axis (Z);
- at least two directing optics (7), which are placed spaced from each other along said transverse direction (Y) and in opposite positions with respect to said work axis (Z), are each adapted to intercept the corresponding said split laser beam (60) and to generate a corresponding said working laser beam (70), which is propagated towards said work axis (Z) to intercept at least said first component (21) at least in said brazing zone (200), at which said working laser beam (70) has a width (L) defined along a direction orthogonal to said work axis (Z);
wherein the ratio between the width (L) of said working laser beam (70) and the diameter (D) of said first component (21) is greater than or equal to 0.5.

10. Assembly according to claim 9, **characterized in that** the ratio between the width (L) of said working laser beam (70) and the diameter (D) of said first component (21) is greater than 0.7.

11. Assembly according to claim 9 or 10, **characterized in that** said plant (1) comprises:
- a control unit (8) operatively connected to said laser source (3);
- a movement device (9), which carries said brazing module (4) mounted thereon, is adapted to position said operative head (5) in multiple operative positions, in each of which said operative head (5) is placed with said work axis (Z) aligned with a corresponding said first component (21), and is operatively connected to said control unit (8), which is arranged for actuating said movement device (9) between:
- a positioning state, in which said movement device (9) places said operative head (5) stationary with respect to said support element (2) in a said operative position, and
- a transition state, in which said movement devices (9) moves said operative head (5) between two said operative positions;
wherein said control unit (8) is arranged for turning on said laser source (3) when said movement device (9) is in said positioning state, and for turning off said laser source (3) when said movement device (9) is in said transition state.

12. Assembly according to any one of the preceding claims from 9 to 11, **characterized in that** the brazing module (4) of said plant (1) comprises at least two operative heads (5), placed side-by-side each other and with the respective said transverse directions (Y) parallel to each other; wherein said laser source (3) comprises:
- a laser emitter (31) arranged for emitting at least one primary laser beam (310);
- a collimation module (32), which is arranged for intercepting said primary laser beam (310) and generating at least one collimated primary laser beam (310);
- a second beam splitter (62), placed between said collimation module (32) and the first beam splitters (6) of said operative heads (5) and adapted to intercept said collimated primary laser beam (310) and to divide it into two said collimated laser beams (30), each of which is propagated towards the first beam splitter (6) of the corresponding said operative head (5).

13. Assembly according to claim 12, **characterized in that** the brazing module (4) of said plant (1) comprises movement means (40) which are mechanically connected to at least one of said operative heads (5) and are actuatable to move it orthogonal to said transverse direction (Y) in order to vary the distance between said operative heads (5).

14. Assembly according to claim 12 or 13, **characterized in that** said brazing module (4) comprises a radiation absorber element (41), which is placed between said second beam splitter (62) and the first beam splitter (6) of one said operative head (5), and is movable between an interference position, in which said radiation absorber element (41) intercepts said laser beam (30) coming from said second beam splitter (62) to block the propagation thereof towards said first beam splitter (6), and a non-interference position, in which said radiation absorber element (41) is spaced from said laser beam (30).

15. Assembly according to any one of the preceding claims from 9 to 14, **characterized in that**:
- each said directing optics (7) of said plant (1) is adapted to propagate said working laser beam (70) along a propagation direction (W) incident on said work axis (Z) with a given incidence angle (α);
- said at least one operative head (5) of said plant (1) comprises tilt means (50) mechanically connected to said directing optics (7) and actuatable for moving said directing optics (7) to vary said propagation directions (W).
